# EUROPÄISCHE PATENTSCHRIFT

(11) **EP 3 490 327 B1**
(45) Veröffentlichungstag und Bekanntmachung des Hinweises auf die Patenterteilung: **16.10.2019**
(21) Anmeldenummer: 17202949.8
(22) Anmeldetag: 22.11.2017
(51) Int. Cl.: H04W 74/08, H04W 84/18

(54) **FUNKVERFAHREN MIT DYNAMISCHER RESERVIERUNG VON ÜBERTRAGUNGSKAPAZITÄT**
RADIO METHOD WITH DYNAMIC RESERVATION OF TRANSMISSION CAPACITY
PROCÉDÉ DE RADIO TRANSMISSION À RÉSERVATION DYNAMIQUE DE LA CAPACITÉ DE TRANSMISSION

(43) Veröffentlichungstag der Anmeldung: 29.05.2019
(60) Teilanmeldung: 19190681.7
(73) Patentinhaber: Rohde & Schwarz GmbH & Co. KG, 81671 München (DE)
(72) Erfinder: Bott, Rainer, 82346 Andechs (DE)
(74) Vertreter: Körfer, Thomas

(56) Entgegenhaltungen:
- EP-A1- 1 389 884
- EP-A1- 1 667 367
- WO-A1-2017/023465

## Beschreibung

Die Erfindung betrifft ein Kommunikationsnetzwerk ohne Netzwerk-Master mit zumindest zwei Netzwerkknoten mit je einer Sende/Empfangsantenne und ein Verfahren zur dezentralen Reservierung von Übertragungskapazität.

Die kabellose Datenübertragung über Funknetzwerke, bevorzugt mittels Ad-Hoc Netzwerken hat in den letzten Jahren immer mehr an Bedeutung gewonnen. Vorteilhafterweise benötigen solche Ad-Hoc Netzwerke keine feste Infrastruktur, wie Router oder Basisstationen. Daher ist ein solches Netzwerk nicht nur zur Unterstützung von Einsatzkräften, z.B. nach Naturkatastrophen sehr hilfreich, sondern auch in Bereichen, für die ein Client-Server basiertes Netzwerk zu kostspielig oder nicht realisierbar ist. Solche Ad-Hoc Netzwerke können mit omnidirektionalen oder gerichteten Antennen realisiert werden.

Bei der gerichteten, auch direktionale Funkübertragung genannt, werden zu übertragende Signale lediglich in eine bestimmte Richtung gesendet bzw. können gerichtete Antennen auch nur Signale aus einer bestimmten Richtung empfangen. Eine omnidirektionale Antenne sendet zu übertragende Daten in alle Richtungen bzw. empfängt Signale auch aus allen Richtungen. Gerichtete Antennen werden in der Funkkommunikation verwendet, um bei gegebener Reichweite eine größere Datenrate zu erzielen oder um bei gegebener Datenrate eine höhere Reichweite zu erzielen. In Funknetzwerken kann durch die Verwendung gerichteter Antennen ein höherer Datendurchsatz erreicht werden, da durch das erreichbare spatial diversity parallel mehrere Kommunikationen zwischen zwei Netzwerkknoten möglich sind.

Gerade für solche Kommunikationsnetzwerke ohne Netzwerk-Master ist eine eigenständige Kontrolle und Koordination durch die einzelnen Netzwerkknoten erforderlich, um zu vermeiden, dass gesendete Informationen verloren gehen. In solchen Netzwerken ohne Netzwerk-Master treten unter anderem Probleme wie das Taubheitsproblem (deafness problem) und das versteckte Knoten Problem (hidden node problem) auf.

Eine Lösung bezüglich des versteckten Knoten Problems (hidden terminal problem) ist beispielsweise in der DE 10 2006 014 308 A1 genannt. Dort wird ein Verfahren zur Multi-Hop-Datenübertragung in einem ad-hoc-Netz mit versteckten Knoten beschrieben. Bei der DE 10 2006 014 308 A1 besteht ein mobiles ad-hoc-Netz aus einer Menge von Funkgeräten, wobei jedes Funkgerät als Router für die jeweils anderen Funkgeräte dient und somit keine zentrale Infrastruktur benötigt. In dem beschriebenen Verfahren ermittelt ein Knoten mit Sendeabsicht die Wahrscheinlichkeit für eine kollisionsfreie Datenübertragung zum nächsten Knoten und überträgt bei einer hohen Wahrscheinlichkeit für eine solche kollisionsfreie Datenübertragung ein Nutzdaten-Paket zum nächsten Knoten, ohne sich über den nächsten Knoten mit in der Umgebung des nächsten Knotens befindlichen versteckten Knoten bezüglich der Datenübertragung zum nächsten Knoten abzustimmen. Ein Medium-Access-Control (MAC)-Protokoll koordiniert den Zugriff auf die einzelnen Knoten und definiert, wie die begrenzte Übertragungsressource effizient und fair zwischen den einzeln Knoten (Funkgeräten) verteilt werden kann.

EP 1 667 367 offenbart ein Verfahren wobei ein RTS Reservierungspaket in einem dezentralen Netzwerk durch ein CTS oder nCTS Paket beantwortet wird. Bei nCTS wird die Dauer der nicht-Verfügbarkeit des Empfängers abgewartet.

Der Erfindung liegt die Aufgabe zugrunde, ein Kommunikationsnetzwerk ohne Netzwerk-Master mit mindestens zwei Netzwerkknoten mit je einer Sende/Empfangs-Antenne und ein Verfahren zur dezentralen Reservierung von Übertragungskapazität zu schaffen. Ganz allgemein soll also eine kollisionsfreie Datenübertragung in einem dezentralen Funknetzwerk mit omnidirektionalen bzw. gerichteten Antennen realisiert werden.

Die Erfindung wird bezüglich des Kommunikationsnetzwerks durch die Merkmale des Anspruchs 1 gelöst. Die davon abhängigen Ansprüche enthalten vorteilhafte Weiterbildungen der Erfindung.

Der Erfindung liegt die Erkenntnis zugrunde, eine kollisionsfreie Datenübertragung zwischen zumindest zwei Netzwerkknoten mit je einer Sende/Empfangs-Antenne zu schaffen, indem zumindest ein Netzwerkknoten eine Reservierungsfunktionalität aufweist, um bei dem zum Empfang eines Nutzdatenpakets bestimmten Netzwerkknoten zumindest einen Zeitschlitz für die Übertragung des gewünschten Nutzdatenpakets zu reservieren.

Es wird somit vermieden, dass ein Netzwerkknoten versucht mit einem Netzwerkknoten zu kommunizieren, der bereits mit einem anderen Netzwerkknoten Daten austauscht (Taubheitsproblem). Des Weiteren wird verhindert, dass eine Kommunikation zwischen zwei Netzwerkknoten aufgebaut wird, die eine bereits bestehende Kommunikation zwischen zwei anderen Netzwerkknoten stören würde oder dass zwei Netzwerkknoten gleichzeitig senden, weil diese aufgrund begrenzter Reichweite nichts voneinander wissen (verstecktes Knoten Problem).

Bevorzugt basiert die Reservierungsfunktionalität auf in einem Datenrahmen definierten Datenpaketen, wobei der Datenrahmen einen so genannten Request To Send Block (zu Deutsch: Anfrage zum Senden), auch RTS Block genannt, aufweist, der RTS Datenpakete beinhaltet, und einen sogenannten Clear To Send Block (zu Deutsch: Klar zum Senden), auch CTS Block genannt, aufweist, der CTS Datenpakete beinhaltet. Zunächst wird mittels RTS Datenpaketen eine Reservierungsanfrage von einem Netzwerkknoten, der Daten versenden möchte, in diesem Fall Sender genannt, an einen zu empfangenden Netzwerkknoten, in diesem Fall Empfänger genannt, gesendet. Diese RTS Datenpakete werden aber auch von allen anderen Netzwerkknoten empfangen. Als Antwort auf die Reservierungsanfrage mittels RTS Datenpaketen, erhält der Sender ein Clear To Send (CTS) Datenpaket oder ein not Clear To Send (zu Deutsch: nicht klar zum Senden), auch nCTS Datenpaket genannt. Mittels dieser CTS bzw. nCTS Datenpakete kann jeder Netzwerkknoten, dem das zumindest eine RTS Datenpaket sendenden Netzwerkknoten, also kurz dem Sender signalisieren, ob er in der Lage ist, den Sender zu empfangen bzw. ob der Sender seinen eigenen Empfang stört.

Vorteilhafterweise erlauben die RTS und CTS bzw. nCTS Datenpakete bevorzugt eine Koordination der Datenübertragung innerhalb des Kommunikationssetzwerkes, da die verschiedenen Netzwerkknoten mittels Reservierungsanfrage und entsprechender Rückmeldung den Datenfluss kontrollieren können. Anhand der CTS bzw. nCTS Rückmeldungen kann jeder Sender entscheiden, ob er an einen bestimmten Empfänger senden kann, ohne den Empfang bei anderen Sendern zu blockieren.

Bevorzugt wird mittels einem RTS Datenpaket zumindest eines Netzwerkknotens die Reservierung auch mehrerer Zeitschlitze innerhalb eines Rahmens angefragt.

Vorteilhafterweise kann auch über einen Zeitschlitz hinaus Kapazität beim Empfänger bevorzugt angefragt werden. Diese dynamische Reservierung in Abhängigkeit von den zu sendenden Nutzdaten erhöht die Flexibilität bei der Datenübertragung. Zumindest eines der RTS Datenpakete kann auch Informationen über die Datenmenge enthalten, die übertragen werden soll und/oder die Information, dass zu bereits reservierten Zeitschlitzen zusätzliche Zeitschlitze reserviert werden sollen.

Bevorzugt folgt auf ein RTS Datenpaket vom Sender ein CTS Datenpaket vom angefragten Empfänger, sofern Zeitschlitzte für eine Datenübertragung verfügbar sind. Wenn hingegen der Empfänger keine Reservierung von Zeitschlitzen annehmen kann, da die Zeitschlitze bereits von anderen Netzwerkknoten reserviert wurden, folgt auf ein RTS Datenpaket vom Sender ein nCTS Datenpaket. Zumindest eines der nCTS Datenpakete kann Informationen darüber erhalten wie lange die Zeitschlitze belegt sind und/oder auch wann eine erneute Reservierungsanfrage gestellt werden soll. Des Weiteren ist es auch denkbar, dass das nCTS Datenpaket Positionsdaten für den anfragenden Sender beinhaltet, die dem Sender eine Position vorgeben, die eine Reservierung von Zeitschlitzen ermöglicht und somit zum Erhalt eines CTS Datenpakets führt.

Bevorzugt signalisiert ein CTS Datenpaket, dass innerhalb eines Rahmens mehr als ein Zeitschlitz reserviert werden kann bis das nächste RTS Datenpaket empfangen wird und mit einem CTS Datenpaket beantwortet wird.

Auch wenn mittels RTS Datenpaket beispielsweise nur ein oder eine definierte Anzahl von Zeitschlitzen angefragt wurde, umfasst vorteilhafterweise zumindest eines der CTS Datenpakete bevorzugt Informationen über die mögliche reservierbare Anzahl von Zeitschlitzen bis zu einem definierten Zeitpunkt, nämlich bis ein RTS Datenpaket empfangen wird und mit einem CTS Datenpaket beantwortet wird. Somit kann der Sender an diesen Netzwerkknoten so lange Daten senden bis dieser Netzwerkknoten ein RTS Datenpaket erhält und mit CTS beantwortet. Somit wird die Datenkommunikation optimiert, da so lange Daten an einen Netzwerkknoten gesendet werden können, bis dieser Netzwerkknoten anderweitig belegt ist. Diese zusätzliche Information innerhalb der CTS Datenpakete erhöht weiter die Flexibilität, da nicht nur auf die Reservierungsanfrage eingegangen wird, sondern auch zusätzliche Informationen über eine mögliche höhere Kapazität als jene die angefragt wurde, gegeben wird.

Bevorzugt weist zumindest ein Netzwerkknoten eine strahlformende Funktionalität auf und die zu diesem Netzwerkknoten gehörige Antenne sendet bevorzugt einen gerichteten elektromagnetischen Strahl bzw. eine gerichtete elektromagnetische Welle aus.

Vorteilhafterweise, kann die Sendekeule des elektromagnetischen Strahls bevorzugt sehr schnell umgeschaltet werden und somit kann ein gerichteter Strahl in beliebige Richtungen gesendet werden.

Bevorzugt ist die Antenne ist auch in der Lage, elektromagnetische Strahlen aus verschiedenen Richtungen zu empfangen, sich also in verschiedene Richtungen auszurichten bzw. zu fokussieren.

Vorteilhafterweise, kann auch die Strahlschwenkung mittels Strahlformung im Empfangsfall bevorzugt sehr rasch erfolgen. Es ist auch denkbar, Antennen mit mechanischer Richtwirkung für die Kommunikation zwischen den einzelnen Knoten zu verwenden. Allerdings sind dann mehrere solcher Antennen nötig und es sollte durch Umschaltung zwischen den einzelnen Antennen möglich sein, die notwendige räumliche Abdeckung zu erreichen. Des Weiteren ist es vorteilhaft, wenn durch die Verwendung gerichteter Antennen bei gegebener Reichweite eine größere Datenrate zu erzielen ist bzw. dass mittels gerichteter Antenne bei gegebener Datenrate eine höhere Reichweite zu erzielen ist. Ein weiterer Vorteil der gerichteten Antennen ist eine Erhöhung der Energieeffizienz und die Erhöhung der Widerstandsfähigkeit gegen Interferenzen und Störungen.

Auch werden Parameter wie LPI (Low Probability of Intercept, zu Deutsch: geringe Abfangwahrscheinlichkeit) und LPD (Low Probability of Detection, zu Deutsch: geringe Nachweiswahrscheinlichkeit), welche vor allem in der Nachrichtenübertragung in Krisengebieten eine wichtige Rolle spielen, verbessert und auch die Aufklärbarkeit wird durch die Verwendung gerichteter Sende und/oder Empfangsantennen minimiert.

Bevorzugt sind die einzelnen Netzwerkknoten zeitlich synchronisiert und/oder die Position der einzelnen Netzwerkknoten ist bekannt.

Bevorzugt ist das zumindest eine Nutzdatenpaket in mehr als einen Zeitschlitz unterteilt.

Bevorzugt sendet ein Netzwerkknoten Datenpakete an einen gewünschten Empfänger, auch wenn der Netzwerkknoten ein nCTS Datenpaket erhalten hat. Dies ist der Fall, wenn die zu sendenden Daten eine hohe Priorität haben und die Datenpakete daher beispielsweise mit Quality-of-Service (QoS) Informationen (zu Deutsch: Dienstgüte Informationen), gekennzeichnet sind.

Sind QoS-Informationen in den RTS und/oder CTS bzw. nCTS Datenpaketen enthalten, können Sender bzw. Empfänger vorteilhafterweise entscheiden, ob höher priorisierte Daten bevorzugt werden oder nicht.

Bevorzugt stellt ein Netzwerkknoten innerhalb eines Zeitschlitzes gleichzeitig bei mehreren Netzwerkknoten eine Reservierungsanfrage, indem innerhalb eines Zeitschlitzes RTS Datenpakte an mehrere Netzwerkknoten gesendet werden.

Bevorzugte Ausführungsbeispiele der Erfindung werden nachfolgend unter Bezugnahme auf die Zeichnung lediglich beispielhaft beschrieben. In der Zeichnung zeigt:
- Fig. 1: ein Beispiel für das Taubheitsproblem (deafness) Problem in einem Kommunikationsnetzwerk mit drei Netzwerkknoten;
- Fig. 2: ein Ausführungsbeispiel für den erfindungsgemäßen Datenrahmen, mit dem der Netzwerkknoten die jeweilige Reservierungsfunktionalität erreicht;
- Fig. 3: ein Beispiel für die Vermeidung einer Störung einer laufenden Übertragung verursacht durch die Hauptkeule eines weiteren sendenden Netzwerkknotens und
- Fig. 4: ein Beispiel für die Vermeidung einer Störung einer laufenden Übertragung verursacht durch die Nebenkeule eines weiteren sendenden Netzwerkknotens.

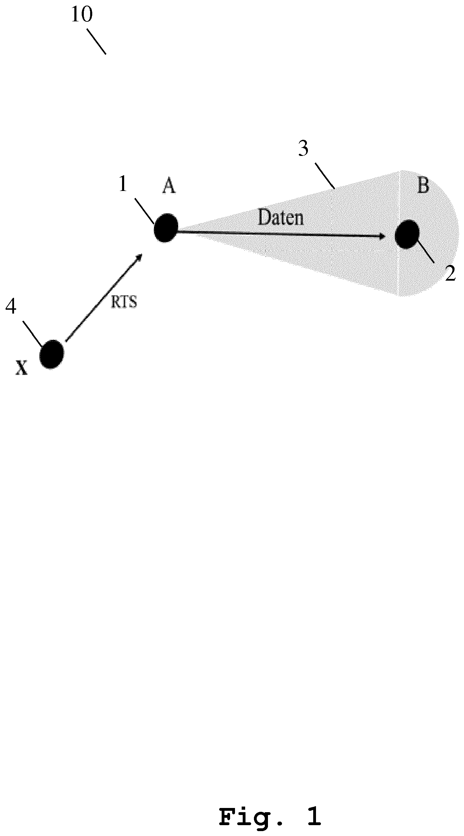

Fig. 1 zeigt eine Darstellung des so genannten Taubheitsproblems (deafness problem), das vor allem in gerichteten Kommunikationsnetzwerken auftritt. Gerichtetes Kommunikationsnetzwerk bedeutet in diesem Kontext, dass die Sendeantenne einen gerichteten elektromagnetischen Strahl aussendet, und dass die Empfangsantenne sich auf den Empfang eines elektromagnetischen Strahls aus einer bestimmten Richtung fokussieren kann. Taubheit in gerichteten Netzten tritt beispielsweise dann auf, wenn ein Netzwerkknoten X (4), der senden möchte, auch Sender genannt, mit einem anderen Netzwerkknoten A (1) kommunizieren möchte, dieser Netzwerkknoten A (1) aber seine Strahlungskeule (3) bereits auf einen anderen Netzwerkknoten B (2) ausgerichtet hat.

In der Darstellung gemäße Fig. 1 kommuniziert Netzwerkknoten A (1) mit Netzwerkknoten B (2), wobei aber Netzwerkknoten X (4) ebenfalls eine Kommunikation mit Netzwerkknoten A (1) beginnen möchte. Da Netzwerkknoten X (4) keine Kenntnis davon hat, dass der Netzwerkknoten A (1) seine Keule (3) auf Netzwerkknoten B (2) ausgerichtet hat, wodurch keine Kommunikation zwischen Netzwerkknoten X (4) und Netzwerkknoten A (1) möglich ist, versucht der Netzwerkknoten X (4) immer wieder mit dem Netzwerkknoten A (1) eine Verbindung durch das wiederholende Senden eines Request To Send (RTS) Datenpakets (zu Deutsch: Anfrage zum Senden) aufzubauen. Somit verschwendet der Netzwerkknoten X (4) Übertragungskapazitäten. Des Weiteren kann der Netzwerkknoten X (4) annehmen, dass Netzwerkknoten A (1) außerhalb seiner Sendereichweite liegt, da keinerlei Rückmeldung auf die RTS Datenpakte erfolgt. Die Darstellung in Fig. 1 soll die Notwendigkeit darlegen, dass jeder Netzwerkknoten zu definierten Zeitpunkten sendet bzw. empfängt, um Störungen und Datenkollisionen im Kommunikationsnetzwerk zu vermeiden.

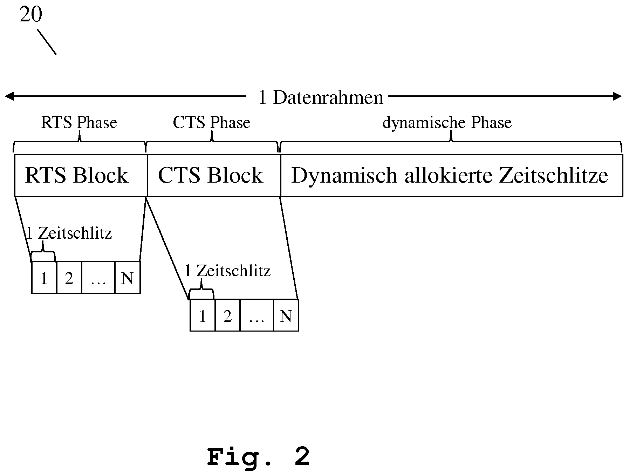

Fig. 2 zeigt den erfindungsgemäßen Datenrahmen (20) für eine Medien-Zugriffssteuerung (Medium Access Control auch MAC abgekürzt) basierend auf einem TDMA-Schema für ein Kommunikationsnetzwerk bzw. Funknetzwerk.

Der genannte Datenrahmen bzw. Frame (20) ist beispielsweise 1 Sekunde lang. Alle festen Allokierungen von Zeitschlitzen, auch Slots genannt wiederholen sich auf dieser Frame Basis. Ein Frame beinhaltet eine bestimmte Anzahl von Slots, wobei innerhalb eines Slots auch nur ein Teilnehmer, also ein Netzwerkknoten des Kommunikationsnetzwerks, sendet. Die Größe der Slots ist abhängig von der gewünschten bzw. geforderten Datenrate aber auch vom Typ des Kommunikationsnetzwerkes. Typische Slotlängen betragen 1-10ms. In den Slotlängen müssen auch notwendige Guard-Intervalle für den Laufzeitausgleich der Funkübertragung berücksichtigt werden. Für den Flugfunk betragen solche Laufzeitunterschiede beispielsweise bis zu 1,34ms.

Das erfindungsgemäße Schema (20) soll Datenkollisionen in einem Funknetzwerk reduzieren und auch Probleme wie beispielsweise das Taubheitsproblem vermeiden. Für ein Kommunikationsnetzwerk mit ausschließlich gerichteten Sende und Empfangsantennen wird angenommen, dass jeder Netzwerkknoten die Position der anderen Netzwerkknoten kennt und daher seine Antenne sowohl für das Senden als auch für das Empfangen entsprechend ausrichten kann. Ein sendender Netzwerkknoten wird in weiterer Folge auch Sender genannt, ein empfangender Netzwerkknoten wird in weiterer Folge auch Empfänger genannt.

Der erfindungsgemäße Datenrahmen (20), beinhaltet einen sogenannten RTS Block, wobei RTS für Request To Send steht (zu Deutsch: Anfrage zum Senden). Im RTS Block des zumindest einen Datenrahmens (20) des jeweiligen Netzwerkknotens, der an einen anderen oder auch mehrere andere Netzwerkknoten Nutzdaten senden möchte, sind bevorzugt sowohl die RTS Datenpaketinformationen mit den Reservierungsanfragen des jeweiligen Netzwerkknotens an die gewünschten Empfänger der Nutzdaten abgelegt, als auch die von anderen Netzwerkknoten empfangenen RTS Datenpaketinformationen mit deren Reservierungsanfragen. An den RTS Block schließt der CTS Block an, wobei CTS für Clear To Send steht (zu Deutsch: Klar zum Senden).

Innerhalb des CTS Blocks befinden sich bevorzugt auch die nCTS Datenpaketinformationen. Im CTS Block des Datenrahmens (20) des jeweiligen Netzwerkknotens, der an einen anderen oder auch an mehrere andere Netzwerkknoten Nutzdaten senden möchte, sind bevorzugt sowohl die empfangenen CTS Datenpaketinformationen bzw. nCTS Datenpaketinformationen der anderen Netzwerkknoten, welche die Nutzdaten erhalten sollen, als Antwort auf die Reservierungsanfragen abgelegt. Es sind aber auch die gesendeten CTS Datenpaketinformationen bzw. nCTS Datenpaketinformationen, die als Antwort auf die Reservierungsanfragen aller anderen Sender gesendet wurden, abgelegt.

Mittels des RTS Blocks kann jeder Netzwerkknoten bzw. jeder Sender im für ihn reservierten RTS Zeitschlitz mittels RTS Datenpakten Reservierungswünsche an einen oder mehrere Empfänger richten. Mittels dem an den RTS Block angrenzenden CTS Block signalisieren die Empfänger mittels CTS bzw. nCTS Datenpaketen an den jeweiligen Sender, ob sie eine Information empfangen können, ob der jeweilige Sender den Empfang von anderen Sendern stört und wieviel Informationen sie empfangen können.

Die RTS Datenpakte, welche vom Sender übertragen werden, beinhalten bevorzugt die Größe der Information, die der Sender an einen Empfänger senden möchte bzw. die der Sender beim jeweiligen Empfänger reservieren möchte. Die RTS Datenpakte können aber auch die Anzahl der Zeitschlitze beinhalten die im Empfänger innerhalb eines Datenrahmens reserviert werden sollen, wobei mehrere Zeitschlitze innerhalb eines Zeitrahmens als auch mehrere Zeitschlitze in mehr als einem Datenrahmen für eine Reservierung angefragt werden können.

Die Empfänger der RTS Datenpakete signalisieren dem jeweiligen Sender mittels CTS Datenpaketen, welche Zeitschlitze innerhalb eines Datenrahmens oder auch welche Zeitschlitze innerhalb mehrerer Datenrahmen für den Empfang reserviert werden können. Das erfindungsgemäße MAC Schema auf TDMA Basis erlaubt also, durch einen RTS/CTS Handschlag, also dem Senden eines RTS Datenpakets und dem Empfangen eines CTS Datenpakets als Antwort auf das gesendete RTS Datenpaket, dass mehrere Zeitschlitze innerhalb eines Datenrahmens gleichzeitig reserviert werden können, oder auch dass mehrere Zeitschlitze innerhalb mehrerer Datenrahmen gleichzeitig reserviert werden können. In Fig. 2 sind beispielhaft dynamisch allokierte Zeitschlitze innerhalb eines Frames (20) dargestellt.

CTS Datenpakete die signalisieren, dass keine Reservierung möglich ist, werden auch als not Clear To Send bzw. nCTS Datenpakte bezeichnet (zu Deutsch: nicht bereit zum Senden).

Basierend auf den Rückmeldungen, also den CTS bzw. nCTS Datenpakten aller anderen Empfänger, wählt der Sender dann jene Zeitschlitze aus, in denen er an einen bestimmten Empfänger sendet. Der Sender kann also auch Daten an Empfänger übertragen, die auf eine Reservierungsanfrage mit einem nCTS Datenpaket geantwortet haben. Dies geschieht beispielsweise dann, wenn die zu übertragenen Daten mit Quality-of-Service Informationen (zu Deutsch: Dienstgüte Informationen), gekennzeichnet sind. Generell können sowohl Sender als auch Empfänger Quality-of-Service Datenpakete, die mit RTS und CTS Datenpaketen mitübertragen werden, erkennen und entsprechend höher priorisierte Daten bevorzugen.

Dadurch, dass letztlich der Sender auswählt, in welchen Zeitschlitzen er Nutzdaten an einen Empfänger sendet, kann es vorkommen, dass ein Empfänger Zeitschlitze reserviert hat, die dann aber nicht verwendet werden. Diese stehen somit für den Empfang anderer Sender nicht zur Verfügung. Zur Minimierung dieser Reduktion der Übertragungskapazität kann jeder Sender zu Beginn der Übertragung signalisieren, in welchen Zeitschlitzen er an einen Empfänger sendet. Dies erlaubt jedem Empfänger, nicht verwendete Zeitschlitze für eine nachfolgende Reservierung wieder zu verwenden.

Es ist aber möglich, dass ein Sender prinzipiell mehr Kapazität reklamiert, als er wirklich benötigt. Dadurch werden bei den Empfängern viel mehr Zeitschlitze reserviert, als dann tatsächlich durch den Sender belegt werden. Es ist daher denkbar, sogenannte lernende Empfänger, auch Kognitive Receiver genannt, vorzusehen, die in der Lage sind, ein solches Verhalten der einzelnen Sender zu lernen und gegebenenfalls auch weniger Zeitschlitze zuzuordnen als angefordert wurden. Durch solche kognitiven Empfänger kann die Übertragungskapazität zusätzlich erhöht werden.

Da während des Reservierungsprozesses mittels RTS/CTS Datenpaketen keine Nutzdaten übertragen werden, wird, um einen Overhead (zu Deutsch: Überhang) zu vermeiden, ein RTS/CTS Zyklus nur in größeren Abständen durchgeführt. Die RTS/CTS Blöcke bzw. RTS/CTS Phasen können auch mehrmals innerhalb eines Datenrahmens vorhanden sein.

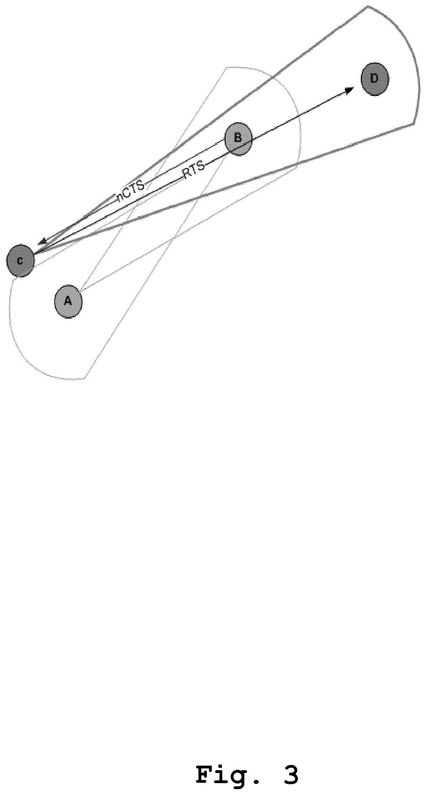

Fig. 3 zeigt, wie basierend auf dem TDMA Schema aus Fig. 2 eine Störung einer Übertragung zwischen zwei Netzwerkknoten A und B durch einen dritten Netzwerkknoten C verhindert wird. Da gemäß dem erfindungsgemäßen Schema aus Fig. 2 alle RTS Zeitschlitze nacheinander angeordnet sind, kann jeder Netzwerkknoten ermitteln, ob eventuelle Aussendungen anderer Netzwerkknoten seinen Empfang stören.

Gemäß Fig. 3 empfängt Netzwerkknoten B Daten von Netzwerkknoten A. Gleichzeitig versucht ein Netzwerkknoten C mit einem Netzwerkknoten D mittels dem Senden eines RTS Datenpakets eine Übertragung zu starten. Eine solche Übertragung würde aber den Empfang des Netzwerkknotens B stören. Eine solche Störung kann auftreten, wenn sich ein empfangender Netzwerkknoten, kurz Empfänger genannt in einer laufenden Übertragung befindet und ein anderer sendender Netzwerkknoten, kurz Sender genannt, zu ihm oder auch zu einem anderen Empfänger Daten übertragen möchte und der Empfänger diesen Sender in der Hauptkeule empfängt. Der betroffenen Empfänger antwortet in diesem Fall mit einem nCTS Datenpaket und signalisiert so dem potentiellen Sender, dass eine Datenübertragung derzeit nicht möglich ist und verhindert so eine Störung seines Empfangs.

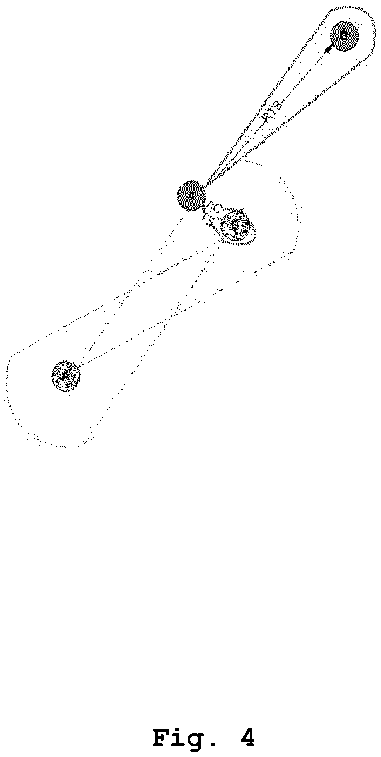

Fig. 4 zeigt eine möglich Störung eines Empfängers B, der von einem Sender A Daten empfängt und durch eine Nebenkeulenaussendung von einem Sender C gestört werden könnte. Das Senden eines nCTS Signals durch den Empfänger B an den potentiellen Sender C verhindert die Störung des Empfangs bei Empfänger B. Der Empfang des Netzwerkknotens B kann also auch über Nebenkeulenempfang gestört werden, was ebenfalls durch Senden eines nCTS Signals des Netzwerkknotens B an den potentiellen Sender C verhindert werden kann. Es ist auch denkbar, dass ein von einer Störung durch eine Nebenkeulenaussendung betroffener Empfänger eine räumliche Nullstelle generiert und dann mit CTS Datenpaketen, welche an den potentiellen Sender C gesendet werden, signalisiert, dass keine Störung auftritt und somit Sender C, eine Verbindung mit D aufbauen kann.

Die Erfindung ist nicht auf die in der Beschreibung offenbarten Ausführungsformen beschränkt. Von der Erfindung sind insbesondere alle Kombinationen der in den Patentansprüchen jeweils beanspruchten Merkmale, der in der Beschreibung jeweils beschriebenen Merkmale und der in den Figuren der Zeichnung dargestellten Merkmale mit abgedeckt.

## Patentansprüche

1. Dezentrales Kommunikationsnetzwerk bestehend aus mindestens zwei Netzwerkknoten (1, 2) mit je einer Sende/Empfangs Antenne,
wobei jeder der Netzwerkknoten (1, 2) ausgebildet ist, um mittels zumindest eines Datenrahmens (20) mit einem anderen der Netzwerkknoten (1, 2) zu kommunizieren,
wobei der Datenrahmen (20) zumindest ein Nutzdatenpaket, welches zwischen den mindestens zwei Netzwerkknoten (1, 2) übermittelt werden soll, beinhaltet,
wobei zumindest ein Netzwerkknoten (1, 2) eine Reservierungsfunktionalität aufweist, um bei dem zum Empfang des Nutzdatenpakets bestimmten Netzwerknoten (1, 2) zumindest einen Zeitschlitz zu reservieren,
wobei die Reservierungsfunktionalität auf im Datenrahmen (20) definierten Datenpaketen basiert, wobei zumindest ein Request To Send (RTS) Datenpaket vom Sender zum Empfänger für eine Reservierungsanfrage gesendet wird und zumindest ein Clear To Send (CTS) oder not Clear To Send (nCTS) Datenpaket als Antwort auf die RTS Datenpakete gesendet wird,
**dadurch gekennzeichnet,**
**dass** ein Netzwerkknoten (1, 2) auch bei erhaltenem nCTS Datenpaket Daten an den nCTS sendenden Netzwerkknoten aussendet, wenn die Daten hohe Priorität haben.

2. Dezentrales Kommunikationsnetzwerk nach Anspruch 1,
**dadurch gekennzeichnet,**
**dass** mittels des RTS Datenpakets von zumindest einem Netzwerkknoten (1, 2) die Reservierung auch mehrerer Zeitschlitze innerhalb eines Rahmens angefragt werden kann.

3. Dezentrales Kommunikationsnetzwerk nach Anspruch 1 oder 2,
**dadurch gekennzeichnet,**
**dass** ein auf das RTS Datenpaket zurückgesendetes CTS Datenpaket dem Sender des RTS Datenpakets signalisiert, dass eine Reservierung durchgeführt werden kann, und/oder dass ein auf das RTS Datenpaket zurückgesendetes nCTS Datenpaket dem Sender des RTS Datenpakets signalisiert, dass keine Reservierung durchgeführt werden kann.

4. Dezentrales Kommunikationsnetzwerk nach einem der Ansprüche 1 bis 3,
**dadurch gekennzeichnet,**
**dass** mittels des CTS Datenpakets signalisiert wird, dass innerhalb eines Rahmens (20) mehr als ein Zeitschlitz reserviert werden kann bis das nächste RTS Datenpaket empfangen und mit einem CTS Datenpaket beantwortet wird.

5. Dezentrales Kommunikationsnetzwerk nach einem der Ansprüche 1 bis 4,
**dadurch gekennzeichnet,**
**dass** zumindest ein Netzwerkknoten (1, 2) eine strahlformende Funktionalität aufweist und die zu diesem Netzwerkknoten gehörige Antenne einen gerichteten Strahl (3) aussendet bzw. einen Strahl gerichtet empfängt.

6. Dezentrales Kommunikationsnetzwerk nach einem der Ansprüche 1 bis 5,
**dadurch gekennzeichnet,**
**dass** die einzelnen Netzwerkknoten (1, 2) zeitlich synchronisiert sind und/oder die Position der einzelnen Netzwerkknoten (1, 2) bekannt ist.

7. Dezentrales Kommunikationsnetzwerk nach einem der Ansprüche 1 bis 6,
**dadurch gekennzeichnet,**
**dass** das zumindest eine Nutzdatenpaket in mehr als einen Zeitschlitz unterteilt ist.

8. Dezentrales Kommunikationsnetzwerk nach einem der Ansprüche 1 bis 7,
**dadurch gekennzeichnet,**
**dass** ein Netzwerkknoten (1, 2) innerhalb eines Zeitschlitzes bei mehreren zu empfangenden Netzwerkknoten (1, 2) eine Reservierungsanfrage mittels RTS Datenpaketen stellt.

## Claims

1. Non central communication network consisting of at least two network nodes (1, 2) having one transmission/reception antenna each,
wherein each of the network nodes (1, 2) is designed to use at least one data frame (20) to communicate with another of the network nodes (1, 2),
wherein the data frame (20) contains at least one useful data packet intended to be transmitted between the at least two network nodes (1, 2), wherein at least one network node (1, 2) has a reservation functionality in order to reserve at least one time slot at the network node (1, 2) intended to receive the useful data packet,
wherein the reservation functionality is based on data packets defined in the data frame (20), wherein at least one request to send (RTS) data packet is sent from the sender to the receiver for a reservation request and at least one clear to send (CTS) or not clear to send (nCTS) data packet is sent in response to the RTS data packets,
**characterized**
**in that** even when an nCTS data packet is received a network node (1, 2) transmits data to the network node sending nCTS if the data have high priority.

2. Non central communication network according to Claim 1,
**characterized**
**in that** the RTS data packet can be used by at least one network node (1, 2) to request the reservation of even multiple time slots within a frame.

3. Non central communication network according to Claim 1 or 2,
**characterized**
**in that** a CTS data packet returned for the RTS data packet signals to the sender of the RTS data packet that a reservation can be made, and/or in that an nCTS data packet returned for the RTS data packet signals to the sender of the RTS data packet that a reservation cannot be made.

4. Non central communication network according to one of Claims 1 to 3,
**characterized**
**in that** the CTS data packet is used to signal that more than one time slot can be reserved within a frame (20) until the next RTS data packet is received and answered with a CTS data packet.

5. Non central communication network according to one of Claims 1 to 4,
**characterized**
**in that** at least one network node (1, 2) has a beamforming functionality and the antenna associated with this network node transmits a directional beam (3) and directionally receives a beam.

6. Non central communication network according to one of Claims 1 to 5,
**characterized**
**in that** the individual network nodes (1, 2) have synchronized timing and/or the position of the individual network nodes (1, 2) is known.

7. Non central communication network according to one of Claims 1 to 6,
**characterized**
**in that** the at least one useful data packet is divided into more than one time slot.

8. Non central communication network according to one of Claims 1 to 7,
**characterized**
**in that** within a time slot a network node (1, 2) makes a reservation request by means of RTS data packets at multiple network nodes (1, 2) to be received.

## Revendications

1. Réseau de communication décentralisé constitué d'au moins deux noeuds de réseau (1, 2) pourvus chacun d'une antenne d'émission/de réception,
dans lequel chacun des noeuds de réseau (1, 2) est conçu pour communiquer avec un autre des noeuds de réseau (1, 2) au moyen d'au moins une trame de données (20),
dans lequel la trame de données (20) comporte au moins un paquet de données utiles, lequel doit être transmis entre les au moins deux noeuds de réseau (1, 2),
dans lequel au moins un noeud de réseau (1, 2) présente une fonctionnalité de réservation, afin de réserver au moins un créneau temporel dans le cas du noeud de réseau (1, 2) destiné à la réception du paquet de données utiles,
dans lequel la fonctionnalité de réservation se base sur des paquets de données définis dans la trame de données (20), dans lequel au moins un paquet de données demande pour émettre (RTS) est émis par l'expéditeur au destinataire pour une demande de réservation et au moins un paquet de données prêt à émettre (CTS) ou non prêt à émettre (nCTS) est émis comme réponse aux paquets de données RTS,
**caractérisé**
**en ce qu'**un noeud de réseau (1, 2) envoie également des données aux noeuds de réseau émettant nCTS lorsqu'un paquet de données nCTS est reçu, lorsque les données ont une priorité élevée.

2. Réseau de communication décentralisé selon la revendication 1,
**caractérisé**
**en ce que** la réservation également de plusieurs créneaux temporels à l'intérieur d'une trame peut être demandée par au moins un noeud de réseau (1, 2) au moyen du paquet de données RTS.

3. Réseau de communication décentralisé selon la revendication 1 ou 2,
**caractérisé**
**en ce qu'**un paquet de données CTS renvoyé au paquet de données RTS signale à l'expéditeur du paquet de données RTS qu'une réservation peut être effectuée, et/ou
**en ce qu'**un paquet de données nCTS renvoyé au paquet de données RTS signale à l'expéditeur du paquet de données RTS qu'aucune réservation ne peut être effectuée.

4. Réseau de communication décentralisé selon l'une quelconque des revendications 1 à 3,
**caractérisé**
**en ce qu'**il est signalé au moyen du paquet de données CTS que plus d'un créneau temporel peut être réservé à l'intérieur d'une trame (20) jusqu'à ce que le paquet de données RTS suivant soit reçu et qu'une réponse soit donnée avec un paquet de données CTS.

5. Réseau de communication décentralisé selon l'une quelconque des revendications 1 à 4,
**caractérisé**
**en ce qu'**au moins un noeud de réseau (1, 2) présente une fonctionnalité de formation de faisceau et l'antenne appartenant à ce noeud de réseau émet un faisceau (3) dirigé ou reçoit un faisceau de façon dirigée.

6. Réseau de communication décentralisé selon l'une quelconque des revendications 1 à 5,
**caractérisé**
**en ce que** les différents noeuds de réseau (1, 2) sont synchronisés dans le temps et/ou la position des différents noeuds de réseau (1, 2) est connue.

7. Réseau de communication décentralisé selon l'une quelconque des revendications 1 à 6,
**caractérisé**
**en ce que** l'au moins un paquet de données utiles est divisé en plus d'un créneau temporel.

8. Réseau de communication décentralisé selon l'une quelconque des revendications 1 à 7,
**caractérisé**
**en ce qu'**un noeud de réseau (1, 2) dépose une demande de réservation au moyen de paquets de données RTS à l'intérieur d'un créneau temporel dans le cas de plusieurs noeuds de réseau (1, 2) à recevoir.
